# EUROPEAN PATENT APPLICATION

(11) **EP 2 637 085 A1**
(43) Date of publication of application: **11.09.2013**
(21) Application number: 13158146.4
(22) Date of filing: 07.03.2013
(51) Int. Cl.: G06F 3/0481, G06F 3/0488

(54) **Terminal device and method for changing display order of operation keys**

(30) Priority: 07.03.2012 JP 2012050182
(71) Applicant: Funai Electric Co., Ltd., Daito-shi Osaka 574-0013 (JP)
(72) Inventor: Hashimoto, Tadahisa, Daito-shi, Osaka 574-0013 (JP); Yoshioka, Takashi, Daito-shi, Osaka 574-0013 (JP); Chosa, Hirokazu, Daito-shi, Osaka 574-0013 (JP); Arai, Kazuhiro, Daito-shi, Osaka 574-0013 (JP); Tsuchie, Takafumi, Daito-shi, Osaka 574-0013 (JP)
(74) Representative: Grünecker, Kinkeldey, Stockmair & Schwanhäusser

(57) **Abstract**

By detecting position information for a terminal device while an application is running, a range of movement during running can be detected, and the range of movement of the application is recorded and updated as the operation history of each application. Then, when display positions of icons on a display unit are to be changed, it is possible to determine, based on the detected position information, ranges of movement that contain this position information among the recorded ranges of movement. Then, the icons of the applications corresponding to the determined ranges of movement are reflected with priority in changing the display positions.

## Description

### BACKGROUND OF THE INVENTION

### 1. Field of the Invention

The present invention relates to a terminal device which displays operation keys such as icons representing various applications as well as to a method for changing the display order of the operation keys.

### 2. Description of the Related Art

Terminal devices or the like which display icons representing various applications have been known in the past. Furthermore, devices shown in Japanese Patent Application Laid-Open Publication No. 2011-160145, Japanese Patent Application Laid-Open Publication No. H11-39133, Japanese Patent Application Laid-Open Publication No. 2000-99236, and Japanese Patent Application Laid-Open Publication No. 2006-31598 have been known as devices in which the display of these icons is rearranged according to the history of usage of these applications in order to improve ease of use.

Even within the prior art, there is art involving the startup menu of an application being rearranged in relation to the locations and times at which the application is used. However, with regard to the locations, a single particular position is utilized, and with regard to the times, the most recently started one is given priority in rearrangement.

Meanwhile, cases are conceivable in which the location where a user uses an application is in transit or otherwise while mobile. In this case, the position of usage is not a single particular position.

In the prior art, even during such usage while mobile, this is reflected as only a single particular position. In other words, it is assumed that the user is stopped at a certain position.

Moreover, with regard to the times, cases are conceivable in which the mode of usage by the user cannot be adequately handled with only the information indicating that a given application was most recently started up. For example, cases are conceivable in which even when a user is at home, the user may be using news apps or schedule management apps in the time before leaving for work, but in the time segments after returning home, the user may be using video player apps, games, or the like.

In addition, the invention of Japanese Patent Application Laid-Open Publication No. 2006-31598 does not address the case in which a user uses an application while mobile. Furthermore, although the dates and times at which each application is used are recorded, this is for the purpose of determining applications that have been used more recently. The time segments in which the user used the respective applications are not reflected in the rearrangement of application menus or icons.

### SUMMARY OF THE INVENTION

Preferred embodiments of the present invention provide a terminal device and a method for changing a display order of operation keys with which the ease of use of the terminal can be enhanced further by handling various modes of usage by the user.

According to a preferred embodiment of the present invention, a terminal device which starts up a plurality of applications includes a display unit that displays operation keys corresponding to the respective applications; a detection unit that detects position information for the terminal device; a recording unit that makes a plurality of recordings of the position information for each of the applications while the applications are running; and a control unit that, based on the plurality of recordings of position information in the recording unit, determines the region of movement of the terminal device for each of the applications while the applications are running, and, depending on whether or not the position information for the terminal device detected by the detection unit is contained within the regions of movement, makes specified changes to the operation keys, and displays the operation keys on the display unit.

In this configuration, a plurality of recordings of the position information are made by the recording unit for each application while the application is running, and the control unit determines, based on the plurality of recordings of position information in the recording unit, the region of movement of the terminal device for each of the applications while the application is running. In addition, when the operation keys are to be displayed on the display unit, a determination is made as to whether or not the position information for the terminal device detected by the detection unit is contained within the regions of movement. Moreover, based on the results of this determination, the operation keys are subjected to specified changes and displayed on the display unit.

For instance, when the display positions of icons on the display unit are to be changed, a determination is made based on the detected position information such that it is possible to find from among the recorded regions of movement, those containing this position information. Then, the icons of the applications corresponding to the found regions of movement are reflected with priority in the change of display positions.

With various preferred embodiments of the present invention, it is possible to monitor the regions of movement of applications in a terminal device and to rearrange operation keys with the movement of the user being reflected. The icons or the like of applications are preferably organized based on the situation in which the user uses the information terminal. As a result, the user is able to find icons easily and start up applications quickly.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a front view showing one example of a terminal device according to a preferred embodiment of the present invention.

FIG. 2 is a schematic block diagram showing the configuration of a terminal device according to a preferred embodiment of the present invention.

FIG. 3 is a diagram showing a flowchart corresponding to a program that is executed at the time of startup of an application.

FIG. 4 is a diagram showing the contents of a table which records information at the time of startup of an application.

FIG. 5 is a diagram showing a flowchart corresponding to a program that is executed at the time of termination of an application.

FIG. 6 is a diagram showing the contents of a table which records information on the number of times an application is started.

FIG. 7 is a diagram showing the situation in which the operating range of an application is acquired.

FIG. 8 is a diagram showing the contents of a table which records information on the operating range of an application.

FIG. 9 is a diagram showing a flowchart corresponding to the program for laying out the icons of applications.

### DETAILED DESCRIPTION OF THE PREFERRED EMBODIMENTS

Preferred embodiments of the present invention will be described below based on figures.

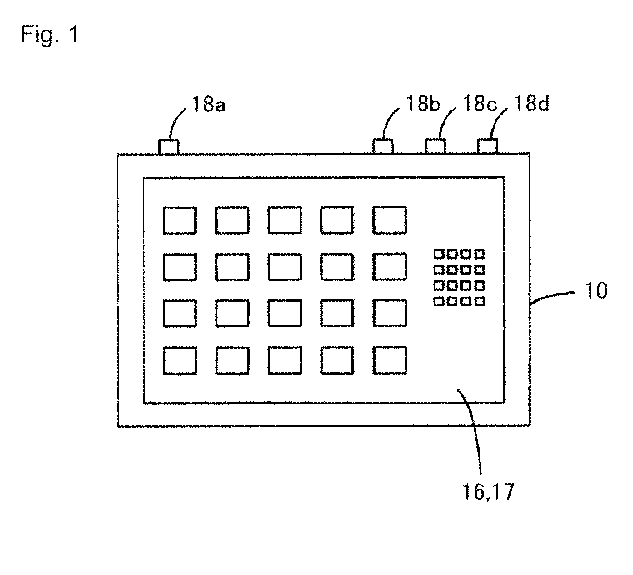

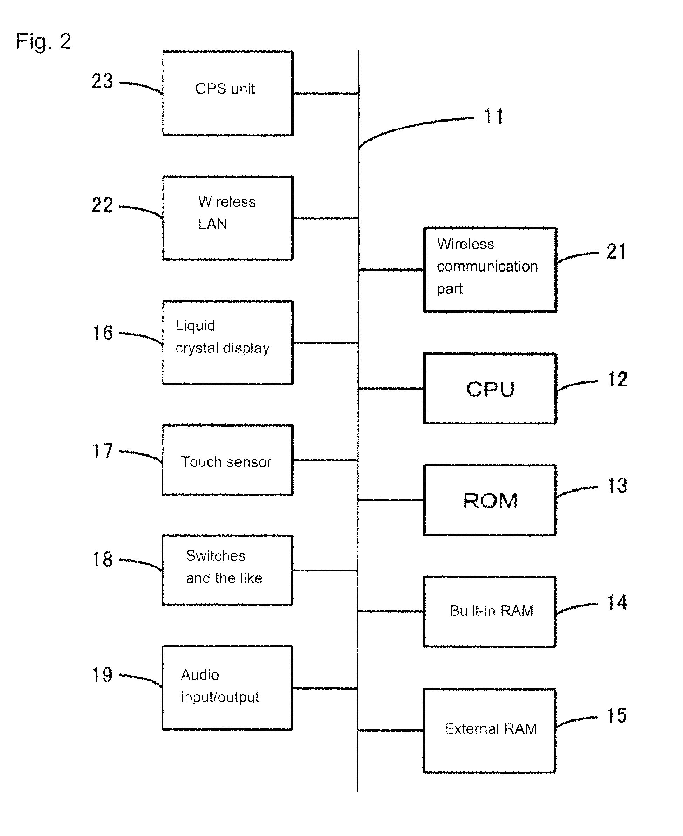

FIG. 1 is a front view showing one example of a terminal device according to a preferred embodiment of the present invention, and FIG. 2 is a schematic block diagram showing the configuration of a terminal device according to a preferred embodiment of the present invention.

In the figures, a terminal device 10 preferably includes a box-shaped case, and a liquid crystal display 16 is disposed with its biggest surface as the front surface. Furthermore, the surface of the liquid crystal display 16 is provided with touch sensors 17 such that touch operations are possible. For the detection of a touch operation, various types of techniques can be adopted such as a pressure-sensitive type and electrostatic-sensitive type. Switch operators 18a through 18d are provided on the top surface of the terminal device 10. The individual switch operators 18a through 18d correspond to a power switch, a home button, a menu button, and a back button, respectively.

As is shown in FIG. 2, a bus 11 arranged to enable electrically connected control of respective components is provided on the interior of the terminal device 10, and as an example, a CPU 12, a ROM 13, a built-in RAM 14, an external RAM 15, an audio input/output unit 19, and the like are connected to this bus 11. Of course, the liquid crystal display 16 and touch sensors 17 are also connected, and the respective switch operators 18a through 18d are connected to the bus 11 as the switches and the like 18 including specific interfaces.

The terminal device 10 preferably defines and functions as a so-called portable wireless telephone and is provided with a wireless communication unit 21 that realizes this function. Moreover, WAN connection such as Internet is possible via the wireless communication unit 21, and the terminal device 10 also makes possible connection to various types of network and an Internet access via a wireless LAN 22. In the terminal device 10, furthermore, a GPS unit 23 which can obtain position information through a global positioning system is connected via the bus 11.

Note that in order to obtain position information, it is also possible to utilize the wireless LAN 22 or the wireless communication unit 21, besides the use of the GPS unit 23, so this eapability is not limited to GPS functions. Then, these components correspond to the detection unit which detects the position information for the terminal device 10.

Thus, the CPU 12 can execute applications stored on the ROM 13, the RAM 14, the external RAM 15, and the like and also control the various types of equipment 16 through 23 via the bus in this case.

Although applications and the arrangement of their icons in a portable terminal device that adopts such a so-called general-purpose OS are presented as an example, the present invention is naturally in no way limited to this. In addition, the display unit preferably includes the liquid crystal display 16 only as an example, and the control unit preferably includes the switches and the like 18 and the touch sensors 17 only as examples, but of course, it is possible to utilize various types of display equipment and operation equipment that have been applicable in recent years. The plurality of applications are not limited to those stored on the RAM 14 or external RAM 15, which is rewritable, and may also be those stored on the ROM 13, which is non-rewritable, or those not actually stored within the terminal device 10 but rather are stored on a storage medium supplied as cloud storage or the like on the Internet. In this case, the applications are also not limited to those called "applications" but rather include those that are called by various types of names which fit the execution environment.

In the case of the terminal device 10, icons representing various applications are displayed on the liquid crystal display 16 which is the display unit, but the present invention is not limited to the display of icons but rather naturally includes the case of displaying the names of applications in the form of a list on an executable menu or the like. Such a display of icons or names of applications corresponds to the display of operation keys.

Specifically, not only can the display unit display the operation keys in the form of icons but can also display the names of applications in the form of a list as the operation keys. Moreover, it is possible to improve the operability for users by changing their display order or the like.

The applications are operated in accordance with the operation input of the control unit, but various input devices that are connected wirelessly may also be used in addition to the physically connected touch sensors or switches and the like 18. This is because, in recent years, input devices and output devices of various types can be connected via a Bluetooth interface, for example. The display positions of the applications or the icons on the display unit do not limit the user interface in the execution environment, and the display positions on an Android portable terminal device are no more than examples. Finally, the terminal device is applicable without any special limitation as long as it is one that is mobile.

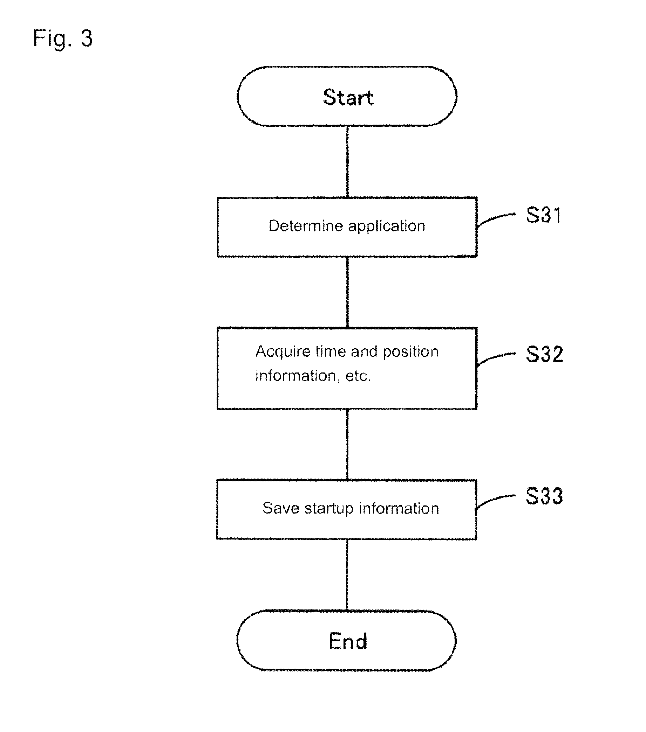

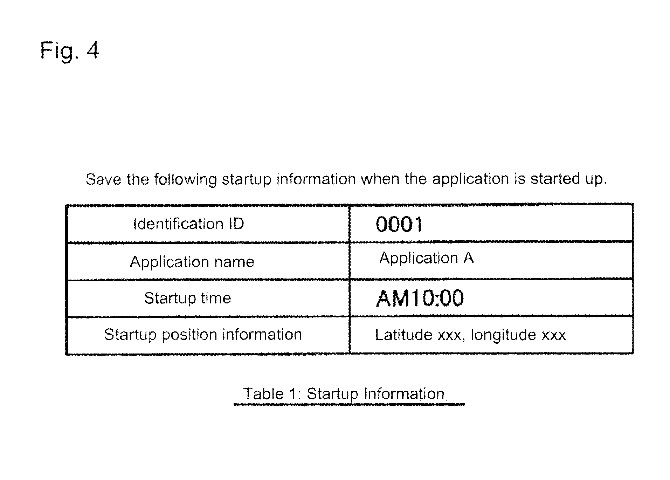

Next, FIG. 3 shows a flowchart corresponding to a program that is executed at the time of startup of an application, and in the course of executing this program, the contents of the table shown in FIG. 4 which records information at the time of startup of the application are generated.

In FIG. 3, when a user touches an icon to start up an application, the name, ID, and the like of the application are first determined in Step S31. In Step S32, the time, position information, and the like are acquired. While FIG. 2 omits a device that explicitly indicates the time, one is naturally provided. The CPU 12 acquires time information from this device and also acquires position information from the GPS unit 23. In cases where it is not possible to acquire position information from the GPS unit 23 because [the user is] indoors, for example, position information is acquired using another technique as described above.

Then, in Step S33, content such as that shown in FIG. 4 is saved as startup information.

More specifically, "0001" is recorded as the identification ID, "Application A" is recorded as the application name, "10:00 AM" is recorded as the startup time, and "latitude xxx, longitude xxx" is recorded as the startup position information. Of course, these are merely one example of an application that is started up. However, this table saves startup information such as that given above as startup start information when the application is started up.

The user executes specified processes with this Application A on the terminal device 10 and then terminates this application at a certain point in time.

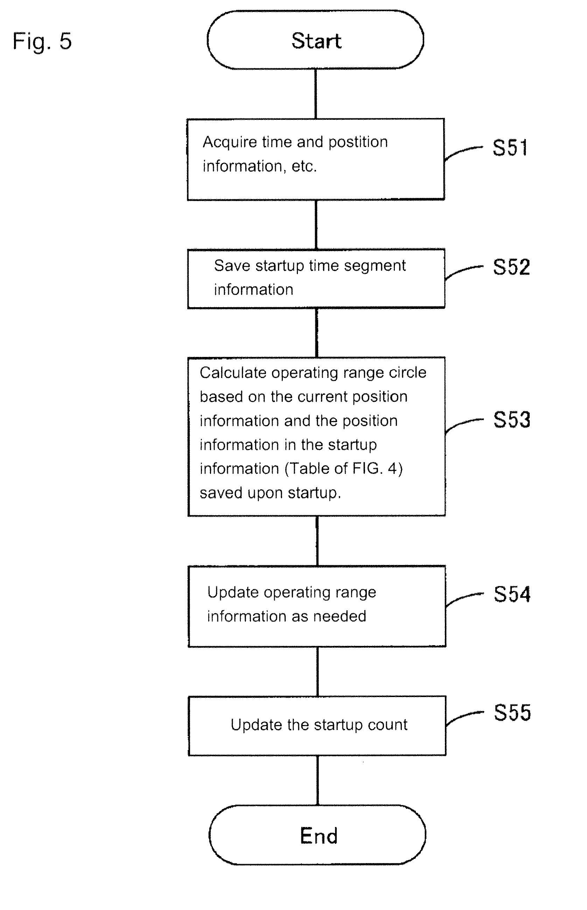

FIG. 5 shows a flowchart corresponding to a program that is executed at the time of termination of the application.

The CPU 12 acquires the time, position information, and the like in Step S51. This process is equivalent to that of Step S32 but may naturally be executed by another technique. Furthermore, in Step S52, the startup time segment information is saved. As was described above, a specific startup time is recorded in the table of FIG. 4, but in the present preferred embodiment, this startup time is updated as time segment information rather than the actual time. For instance, the 24 hours of a day may be divided into several parts as time segments, and the startup time is managed using these time segments.

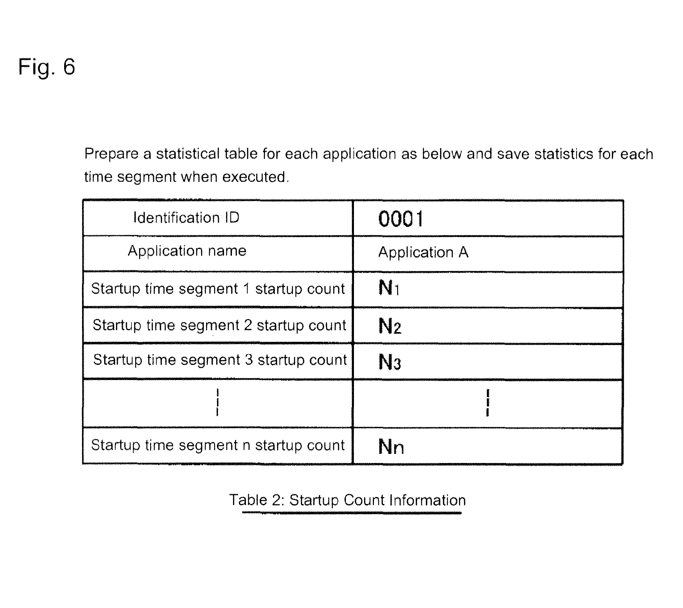

In specific terms, in the table of FIG. 6, a statistical table is prepared for each application as described below as startup count information for the application, and statistics are saved for each time segment in which it is executed.

When Application A is executed, the identification ID is "0001," and the application name is "Application A" as described above. Using either one as an ID for searching, specific recording areas within this table are set forth, and one of the startup time segments 1 through *n* that includes the startup time is specified. Once specified, the numerical value of one of the startup counts N₁ through N*ₙ* corresponding to the specific one of the startup time segments 1 through *n* is incremented by one. This is because Application A is executed one time.

There is no particular restriction on the way of division into such startup time segments 1 through *n*, and it is also possible to prepare startup time segments as default values and to have the user change the way of dividing the day into time segments to suit their own usage environment. The reason for this is that there are also cases in which a "morning person" and a "night person" have different ways of dividing the day into time segments that reflect their usage environments.

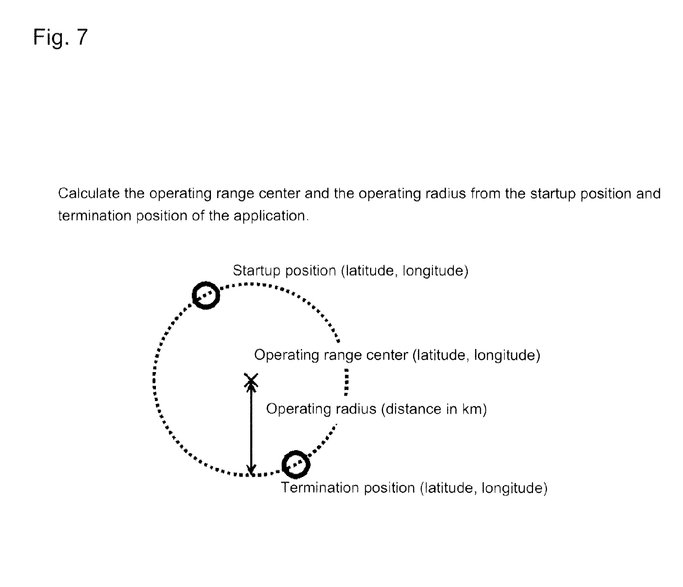

In Step S53, an operating range circle is calculated based on the current position information and the position information in the startup start information (table of FIG. 4) saved upon startup. FIG. 7 is a diagram showing the situation in which the operating range of an application is acquired.

In specific terms, the center of the operating range and the operating radius are calculated from the startup start position and termination position of the application. Of course, the operating range center is the central point between the startup start position and the termination position, and this is calculated as latitude and longitude. In addition, the operating radius is a distance in units of km, which is the distance between the startup start position and the termination position. Note that it is also possible to set the unit as km as a default and to make it changeable to suit the user's mobility situation. In addition, the center position and radius of the operating range circle may also be managed as vector data. In any case, the startup start position (latitude, longitude), operating range center (latitude, longitude), operating radius (distance in km), termination position (latitude, longitude), and the like are obtained.

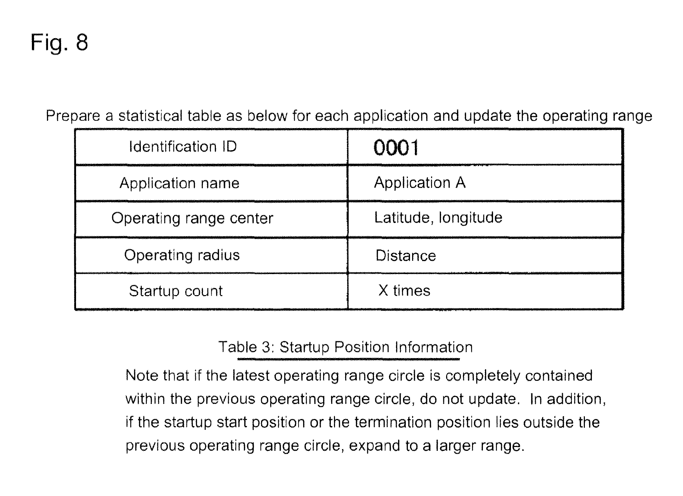

In Step S54, the operating range information is updated as needed. The operating range information is managed with the table shown in FIG. 8; a statistical table is prepared for each application as described below, and the operating range is updated. Note that FIG. 8 shows the contents of a table which records the operating range information of an application.

First, for Application A, the identification ID is "0001," the application name is "Application A," "latitude, longitude" is recorded as the center of the operating range, and "distance" is recorded as the operating radius. In Step S55, furthermore, for the startup count, the number of startup times is updated as "X times," which is the number of times Application A had been started within this operating range circle.

Here, the startup count is not updated in cases where the most recent operating range circle is completely contained within the previous operating range circle. Moreover, in cases where the startup start position or the termination position falls outside the previous operating range circle, it is expanded to a larger range. Such an expansion operation or the like corresponds to the phrase "updated as needed."

Note that Steps S51 through S53 and the like correspond to the method to detect the range of movement while the application is running, and Step S54 corresponds to the method to record and update the range of movement of each application as the operation history of that application.

In the present preferred embodiment, the operating range center and the operating radius are calculated from the startup start position and termination position of the application to find the operating range circle, and this is taken as the region of movement. However, it is also possible to record the position information for each application a plurality of times while it is running and to determine, based on the plurality of recordings of position information, the region of movement of this terminal device 10 for each application while the application is running. If there are a plurality of recordings of the position information for each application, it is only necessary to find the operating range circles for all of the combinations of the two points and to find the largest thereof as the operating range circle as described above. In such a case, the process of making a plurality of recordings of position information for each application while it is running corresponds to the function of the recording unit. Note that the position information of the terminal device 10 at the time of startup and the time of termination of the application is contained within the region of movement in this case.

In addition, the process of finding the operating range circle as described above corresponds to the process of determining the region of movement of the terminal device for each application while it is running based on a plurality of recordings of position information in the recording unit, and this constitutes a function of the control unit.

In the preferred embodiment, the range of movement is managed as a circle represented by the center and the radius, and in specific terms, the range of movement preferably is a circular or substantially circular range that includes the position at which the application is started up and the position at which it is terminated.

However, the technique for specifying the range of movement is not limited to this. For example, in cases where the route of movement is fixed and is a relatively long distance, if this is expressed as a circular range based on the startup start position and the termination position, the range may become excessively large in some cases. For this reason, if we envision public transit, the route of movement is fixed and of a relatively long distance, and this range of movement may be managed as a route that represents the starting point, ending point, and journey. In order to specify the route, vector data may be adopted, or the route may be deemed as one having a specified width with the addition of continuous directions added to the information on individual points within the route.

Thus, in order to set the region of movement as the route of movement of the terminal device 10, in specific terms, vector data may be generated based on a plurality of recordings of position information in the recording unit for each application while it is running, or a set of position information having a specified width with the addition of continuous directions added to the information on individual points within the route may be generated. Furthermore, as the set of position information or vector data, a plurality of sets of vector data representing triangular or substantially triangular regions, for example, may also be used. Specifically, a certain region is divided into a plurality of small triangles, and each of these is represented by an individual set of vector data. If this is done, the amount of information can be reduced. Note that the position information for the terminal device 10 at the time of the startup and the time of termination of the application is contained within this route of movement.

In this case as well, the process of finding the route of movement as described above corresponds to the process of determining the region of movement of the terminal device for each application while it is running based on a plurality of recordings of position information in the recording unit, and this constitutes a portion of the control unit.

The amount of information as a route becomes massive if the path is complex. On the other hand, the movement range circle itself is convenient if a relatively narrow distance of movement is presumed. Because of this, the two may both be used where appropriate. For instance, it will be more convenient to find the distance of movement from the application startup position information and the termination position information and to devise the system such that when this distance of movement is smaller than a specified distance, the range of movement will be managed as a circular or substantially circular range, but when this distance of movement is greater than the specified distance, the range of movement will be managed as a route expressing the starting point, ending point, and journey.

The foregoing is a non-limiting example of a specific technique for managing the user's usage situation. By utilizing this technique, the layout is determined as described below.

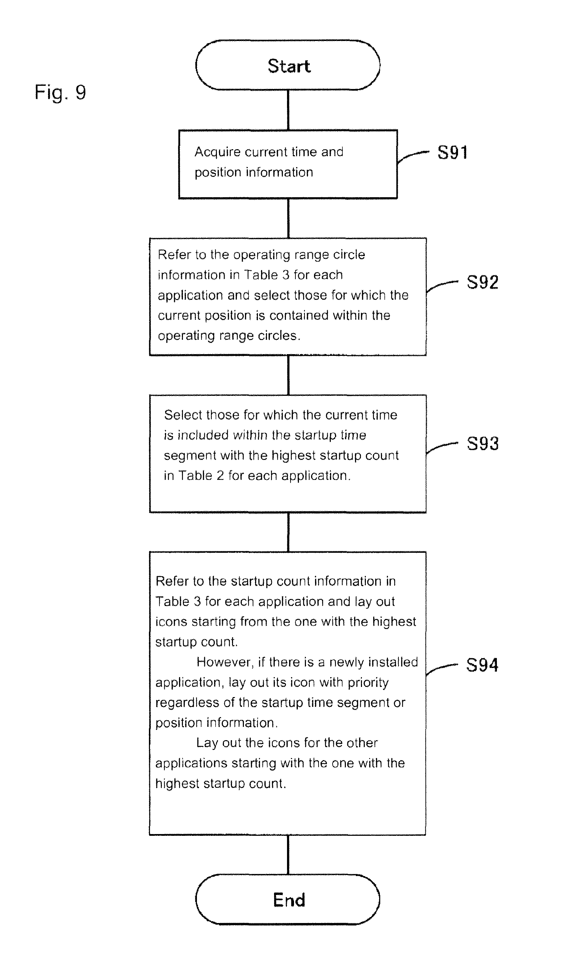

FIG. 9 shows a flowchart corresponding to the program for laying out the icons of applications.

In Step S91, the CPU 12 acquires the current time and position information. The technique for this is equivalent to Steps S32 and S51. Next, in step S92, by referring to the operating range circle information in the table shown in FIG. 8 for each application, the information on such operating range circles is calculated, and those for which the current position is contained within these operating range circles are selected.

Next, in step S93, those for which the current time is included in the startup time segment with the highest startup count in the table shown in FIG. 6 for each application are selected.

Moreover, in Step S94, by referring to the startup count information in the table shown in FIG. 8 for each application, icons are laid out starting from the one with the highest startup count.

However, as an exception to this, if there is a newly installed application, its icon is laid out with priority regardless of the startup time segment or position information.

Moreover, the icons of the other applications are laid out starting from the one with the highest startup count.

In other words, the procedure for this layout is ultimately to lay out icons of applications in the following order:
1. icons of applications that were newly installed before a certain amount of time has elapsed;
2. icons of applications that were started up at the current position and time in the past (with the layout starting from the one with the highest startup count); and
3. icons of the other applications, in order starting from the application started up most often.

One can say that these give first priority to newly installed applications, second priority to those matching in location and the highest startup count, and third priority to those with the highest startup count although the location does not match.

Furthermore, by achieving such a layout, when changing the display positions of the applications or the icons on the display unit, it is possible to reflect with priority the icons of the applications which correspond, based on the detected position information, to the ranges of movement that contain this position information among the recorded ranges of movement.

The specific meaning of reflection with priority depends on the user interface. First, one example thereof is the upper portion of the liquid crystal display 16. Furthermore, this also applies to areas where the user often presses (touches) and therefore can set. In addition, depending on the execution environment, there may be particular areas where the icons of approximately four applications, for example, are always displayed in a fixed manner at specified positions, and these are also applicable. Moreover, it is also possible to have areas at the top left, four corners, and near fixed-location buttons, for example.

Thus, the process of reflecting icons in a display order that depends on whether or not the position information for the terminal device 10 detected by the detection unit is contained within the recorded regions of movement corresponds to the process of making specified changes to the operation keys and displaying them on the display, thus constituting a function of the control unit.

Note that the present preferred embodiment presents a non-limiting example of changing the display positions of applications in the case of laying out icons or displaying the menu. However, independently of this, or in combination therewith, highlighted displays may of course also be implemented.

Thus, one can say that the following processes are performed in a preferred embodiment of the present invention:
I. Storing of the time and position when the user has started up or terminated each application. Also storing of the number of times each application is used.
II. With regard to the position, calculation of a circle that contains the startup position and the termination position, and setting of this circle as the range of usage.
III. With regard to the time, setting of the time segment in which the application is used from the time it is started up and the time it is terminated.
IV. Note that if the time from when an application is started up until it is terminated is short (e.g., about 2 seconds or less), the position, the time, and the number of times used are not saved. These are considered to be times when the user had started up the application in error and thus not collected as information.
V. When laying out the icons of applications, the current position and time are checked against the range of usage and time segments of usage of each application, and the matching applications are laid out in order starting from the ones that are used most frequently.

Moreover, by handling applications that are used while the user is mobile and reflecting the time segments in which the user uses the respective applications in the rearrangement of the icons, it is possible to lay out the icons in a manner that matches the modes of usage by the user, thus also improving convenience to the user.

In addition, as was described above, the following process is performed in the present preferred embodiment.

FIG. 3 illustrates the process that is executed when a user starts up an application. With this process, the name of the application, the startup time, and the startup position are recorded as shown in FIG. 4.

FIG. 5 illustrates the process that is executed when a user terminates an application. With this process, a table such as that shown in FIG. 8 is managed. First, the time segment and the position information in which the application has been running are calculated. The position information is stored as a range circle, and if the current startup position and the termination position are contained within the range circle stored in the past, the position information is not changed, but if one or the other is not contained within the range circle, the range circle is expanded. Furthermore, if neither the start position nor the termination position is contained within the circle, a new range circle is calculated.

FIG. 9 constitutes the process of laying out icons based on the information actually acquired in the processes of FIG. 3 and FIG. 5. This process is executed at fixed intervals, and the layout of icons is updated. Note that if there is a newly installed application, its icon is given priority in the layout. This is because the frequency of starting up newly installed applications and locations where they are used are still unknown and also because the user is thought to want to immediately start up a newly installed application.

Note that in the present preferred embodiment, the layout of icons of various applications was described. However, as a technique to reflect the intent of the user and improve ease of use, the present invention is also applicable to a case in which the user interface to start up applications is a menu, and the intent of the user is also reflected in the rearrangement of the applications in such a menu.

Note that the present invention is in no way limited to the preferred embodiments described herein. The following is disclosed as additional preferred embodiments of the present invention:
- applied by appropriately changing combinations of the mutually substitutable members, configurations, and the like disclosed in the preferred embodiments;
- applied by appropriately substituting with members, configurations, and the like that are not disclosed in the preferred embodiments but are publicly known art and that are mutually substitutable with those disclosed in the preferred embodiments and also by changing the combinations thereof; and
- applied by appropriately substituting with members, configurations, and the like that are not disclosed in the preferred embodiments but are conceivable as alternatives to the members, configurations, and the like disclosed in the preferred embodiments by a person skilled in the art based on publicly known art or the like and also by changing the combinations thereof.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A terminal device which starts up a plurality of applications, the terminal device comprising:
a display unit that displays operation keys corresponding to respective ones of the applications;
a detection unit that detects position information for the terminal device;
a recording unit that makes a plurality of recordings of the position information for each of the applications while each of the applications is running; and
a control unit that is programmed to, based on the plurality of recordings of position information in the recording unit, determine a region of movement of the terminal device for each of the applications while each of the applications is running, and, depending on whether or not the position information for the terminal device detected by the detection unit is contained within the regions of movement, makes changes to the operation keys, and displays the operation keys on the display unit.

2. The terminal device according to claim 1, wherein the control unit converts the plurality of recordings of position information in the recording unit into vector data, and, depending on whether or not the position information for the terminal device detected by the detection unit is contained within the vector data, makes changes to the operation keys, and displays the operation keys on the display unit.

3. The terminal device according to claim 1, wherein the region of movement is a range that includes the position information for the terminal device at startup and termination of each of the applications.

4. The terminal device according to claim 3, wherein the range is a circle represented by a center and a radius.

5. The terminal device according to claim 1, wherein the region of movement is a route of movement of the terminal device.

6. The terminal device according to claim 5, wherein the route of movement includes the position information for the terminal device at startup and termination of each of the applications.

7. The terminal device according to claim 1, wherein the display unit displays the operation keys in the form of icons.

8. The terminal device according to claim 1, wherein the display unit displays the operation keys in the form of a list.

9. The terminal device according to claim 1, wherein when the operation keys are to be subjected to changes and displayed on the display unit, display positions on the display unit are changed with priority being given over the position information such that the operation keys with newer installation times and dates are given priority in the display positions.

10. The terminal device according to claim 1, wherein when the operation keys are to be subjected to changes and displayed on the display unit, in order to display the operation keys in a prioritized manner, display positions are allocated starting from a highest priority position that is specified in advance.

11. The terminal device according to claim 1, wherein when the operation keys are to be subjected to changes and displayed on the display unit, in order to display the operation keys in a prioritized manner, highlighted displays of the operation keys are implemented in combination.

12. The terminal device according to claim 1, wherein when an operation history of each of the applications is to be recorded and updated, in the recording and updating of the time information at a time of startup of each of the applications, 24 hours of a day are divided into a plurality of parts and set as time segments, and the time information is managed using the time segments.

13. The terminal device according to claim 1, wherein
the display unit displays the operation keys corresponding to the respective applications in the form of icons; and
the control unit determines, as each of the regions of movement, a circle represented by a center and a radius based on the position information for the terminal device at startup and termination of the corresponding one of the applications, and determines the circle as a range.

14. A method for changing a display order of operation keys in a terminal device which can start up a plurality of applications and which displays the operation keys corresponding to the respective applications on a display unit, the method comprising the steps of:
detecting position information for the terminal device by using a detection unit;
making a plurality of recordings of the position information for each of the applications while each of the applications is running by using a recording unit;
determining a region of movement of the terminal device each of the applications while each of the applications is running based on the plurality of recordings of position information in the recording unit; and
changing how the operation keys are displayed on the display unit depending on whether or not the position information for the terminal device detected by the detection unit is contained within the regions of movement.
